# EUROPEAN PATENT APPLICATION

(11) **EP 2 846 082 A1**
(43) Date of publication of application: **11.03.2015**
(21) Application number: 14176381.3
(22) Date of filing: 09.07.2014
(51) Int. Cl.: F21V 8/00, B60Q 3/00

(54) **Luminaire and container holder**

(30) Priority: 03.09.2013 JP 2013182135
(71) Applicant: Toshiba Lighting & Technology Corporation, Yokosuka-shi Kanagawa 237-8510 (JP)
(72) Inventor: Shirashi, Hiromitsu, Kanagawa, 237-8510 (JP)
(74) Representative: Bokinge, Ole

(57) **Abstract**

A luminaire of the embodiment includes: a light guide portion having a ring shape; a light-emitting portion having a light-emitting element and configured to irradiate the light guide portion with light; and an incident portion provided on an outer peripheral surface of the light guide portion at one end thereof and facing the light-emitting portion at the other end thereof. An angle between an axial line of the incident portion and a line passing through a center of a connecting portion between the incident portion and the light guide portion and coming into contact with an inner peripheral surface of the light guide portion exceeds 0°.

## Description

### FIELD

The present invention relates to a luminaire and a container holder.

### BACKGROUND

There is a luminaire including a light guide portion having a ring shape and a light-emitting diode configured to irradiate a side surface of the light guide portion with light.

With the luminaire in this configuration, a member provided inside the light guide portion having a ring shape may be irradiated with light from the periphery thereof.

However, an inner peripheral surface of the light guide portion having a ring shape, which is a light-emitting surface, is hardly visible.

### DESCRIPTION OF THE DRAWINGS

Fig. 1 is a schematic perspective view illustrating a container holder 100;
Fig. 2 is a schematic perspective view illustrating the container holder 100;
Fig. 3 is a schematic drawing illustrating a luminaire 1;
Fig. 4 is a schematic partial perspective view illustrating a cross-sectional shape of a light guide portion 3;
Fig. 5 is a drawing illustrating a state of light leakage in the light guide portion 30;
Fig. 6 is a drawing illustrating a state of light leakage in the light guide portion 3;
Fig. 7A and 7B are graph diagrams illustrating a relationship between a cross-sectional dimension and a light-incident efficiency of the light guide portion 3;
Fig. 8 is a schematic perspective view illustrating a container holder 110 that is capable of holding one container;
Fig. 9 is a schematic drawing illustrating a light guide portion 13 provided on the container holder 110; and
Fig. 10 is a schematic perspective view illustrating a state of disposition of an incident portion of another embodiment.

### DETAILED DESCRIPTION

A luminaire of the embodiment includes: a light guide portion having a ring shape; a light-emitting portion having a light-emitting element and configured to irradiate the light guide portion with light; and an incident portion provided on an outer peripheral surface of the light guide portion at one end thereof and facing the light-emitting portion at the other end thereof.

An angle between an axial line of the incident portion and a line passing through a center of a connecting portion between the incident portion and the light guide portion and coming into contact with an inner peripheral surface of the light guide portion exceeds 0°.

According to the luminaire as described above, an inner peripheral surface of the light guide portion having a ring shape, which is a light-emitting surface, is visible. In addition, the brightness of the light-emitting surface in the vicinity of the connecting portion is prevented from becoming too bright.

A width in the vicinity of the connecting portion in plan view may be set to be larger than a width of the light guide portion in plan view.

In this configuration, the brightness of the light-emitting surface in the vicinity of the connecting portion is prevented from becoming too bright.

A luminaire of the embodiment includes: a light guide portion having a ring shape including: a first irradiating portion having an inner peripheral surface of a shape constituting part of a circle in plan view; a second irradiating portion having an inner peripheral surface of a shape constituting part of a circle in plan view; a third irradiating portion provided at an end of the first irradiating portion at one end thereof and provided at one end of the second irradiating portion at the other end thereof; and a fourth irradiating portion provided at the other end of the first irradiating portion at one end thereof and provided at the other end thereof at the other end of the second irradiating portion; and a light-emitting portion having a light-emitting element and configured to irradiate the light guide portion with light.

Light irradiated from the light-emitting portion and incident on the light guide portion is irradiated from the inner peripheral surface of the light guide portion.

According to the luminaire as described above, an inner peripheral surface of the light guide portion having a ring shape, which is a light-emitting surface, is visible.

Also, the luminaire may further includes an incident portion provided on the light guide portion at one end thereof and facing the light-emitting portion at the other end thereof.

With the luminaire of this configuration, a light-incident efficiency may be enhanced.

One end of the incident portion is provided at least one of an outer peripheral surface of the first irradiating portion and an outer peripheral surface of the second irradiating portion.

According to the luminaire, arrangement of the incident portion is facilitated.

An angle between an axial line of the incident portion and a line passing through a center of a connecting portion between the incident portion and the first irradiating portion and coming into contact with an inner peripheral surface of the first irradiating portion may be set to exceed 0°.

In this configuration, the brightness of the light-emitting surface in the vicinity of the connecting portion is prevented from becoming too bright.

An angle between an axial line of the incident portion and a line passing through a center of a connecting portion between the incident portion and the second irradiating portion and coming into contact with an inner peripheral surface of the second irradiating portion may be set to exceed 0°.

In this configuration, the brightness of the light-emitting surface in the vicinity of the connecting portion is prevented from becoming too bright.

A width in the vicinity of the connecting portion in plan view may be set to be larger than a width of the first irradiating portion and a width of the second irradiating portion in plan view.

In this configuration, the brightness of the light-emitting surface in the vicinity of the connecting portion is prevented from becoming too bright.

A width of the third irradiating portion and a width of the fourth irradiating portion in plan view may be set to be larger than a width of the first irradiating portion and a width of the second irradiating portion in plan view.

In this configuration, the brightness of the light-emitting surfaces in the vicinity of the end portion of the third irradiating portion and in the vicinity of the end portion of the fourth irradiating portion are prevented from becoming too bright.

At least one of the inner peripheral surface and the outer peripheral surface of the light guide portion may be provided with concavities and convexities.

In this configuration, the brightness of the light-emitting surface may be increased.

A container holder according to an embodiment includes: a cover portion having a hole portion for inserting the container; a holding portion having an opening for inserting the container, and provided so that the opening faces the hole portion of the cover portion; and at least one of the luminaires provided between the cover portion and the holding portion.

According to the container holder as described above, an inner peripheral surface of the light guide portion having a ring shape, which is a light-emitting surface, is visible. Therefore, insertion of the container is facilitated.

Referring now to the drawings, an embodiment will be described. In the respective drawings, the same components are denoted by the same reference numerals, and detailed description will be omitted as needed.

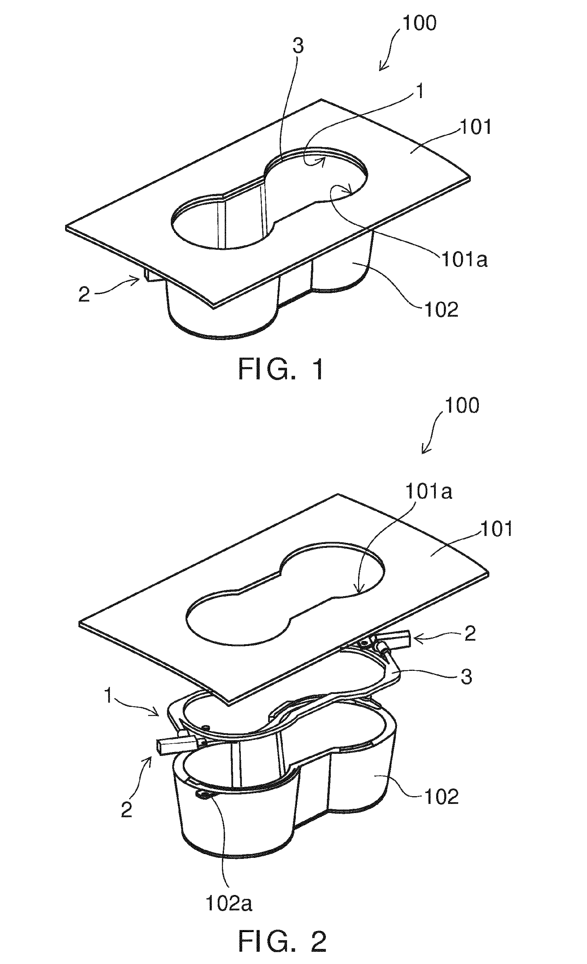

Fig. 1 is a schematic perspective view illustrating a container holder 100.
Fig. 2 is a schematic perspective view illustrating the container holder 100.

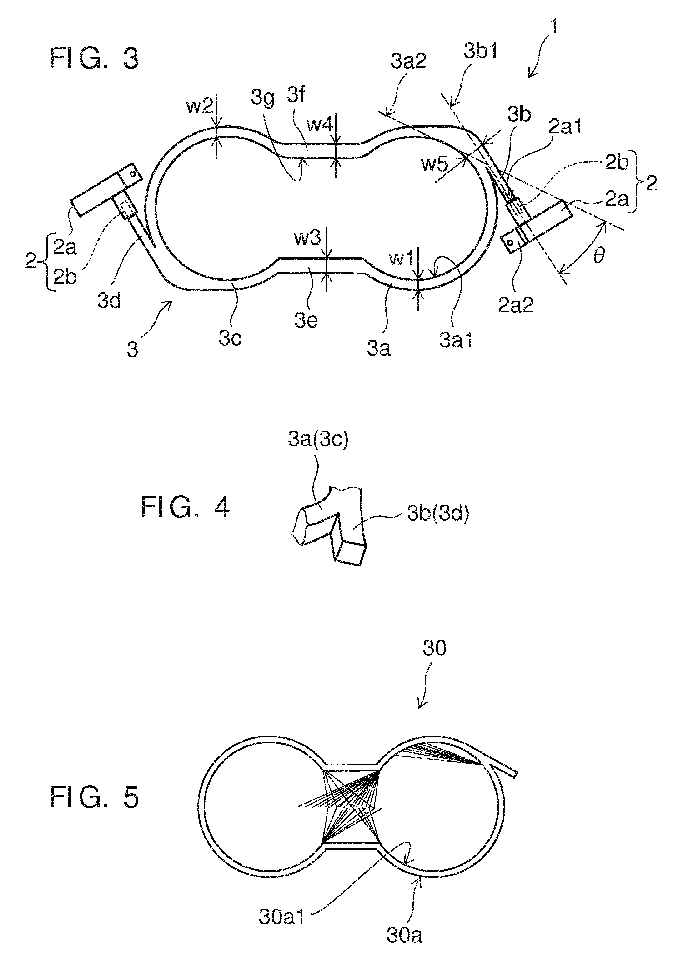

Fig. 3 is a schematic drawing illustrating a luminaire 1.
Fig. 4 is a schematic partial perspective view illustrating a cross-sectional shape of a light guide portion 3.

As illustrated in Fig. 1 and Fig. 2, the container holder 100 is provided with a cover portion 101, a holding portion 102, and a luminaire 1.

The container holder 100 illustrated in Fig. 1 and Fig. 2 is configured to hold up to two containers.

The container to be held by the container holder 100 includes containers for holding beverages. The container includes cups formed of paper or a resin, tins, or bottles.

The container holder 100 may be provided in cabins of movable bodies such as vehicles, railroads carriages, aircrafts, ships, and the like. In this case, the container holder 100 may be provided, for example, in the vicinity of a seat on which a passenger is seated.

When the container is held by the container holder 100, an end of the container protrudes from the cover portion 101.

Then, in a state in which the container is not inserted, the inner peripheral surface 3g (light-emitting surface) of a light guide portion 3 is visible via a hole portion 101a of the cover portion 101.

The cover portion 101 has a plate shape, and is provided with the hole portion 101a for inserting the container.

The hole portion 101a penetrates through the cover portion 101 in the thickness direction. The size and the shape of the hole portion 101a has the same as those of an inside hole of the light guide portion 3 having a ring shape. Therefore, when assembling the container holder 100, an edge of the hole portion 101a and the inner peripheral surface of the light guide portion 3 overlap with each other in plan view.

The material of the cover portion 101 is not specifically limited. However, if a resin is employed, manufacture of the cover portion 101 is easy.

The cover portion 101 may have a light blocking effect, or may have translucency.

The joint between the cover portion 101 and the luminaire 1 is achieved, for example, by adhesion with an adhesive agent.

However, the joint between the cover portion 101 and the luminaire 1 is not necessarily required and, for example, the luminaire 1 may be simply interposed between the cover portion 101 and the holding portion 102.

The cover portion 101 may be an interior material of a vehicle.

The holding portion 102 has a box shape, and one end side is opened. The other end side of the holding portion 102 may be opened and may not be opened. The holding portion 102 is provided so that the opening faces the hole portion 101a of the cover portion 101.

The container is inserted into the opening of the holding portion 102, and the inserted container is held by at least one of a side wall inside the holding portion 102 and a bottom surface inside the same.

The holding portion 102 has a shape gradually reducing in cross-sectional area as it goes toward a side opposite to the side where the luminaire 1 is provided.

The material of the holding portion 102 is not specifically limited. However, if a resin is employed, manufacture of the holding portion 102 is easy.

When the calorific power of the light-emitting element 2b is high, the holding portion 102 is formed by using a material having a high heat conductivity.

A material having a high heat conductivity may be selected from, for example, a high heat conductive resin, metal, or ceramics such as aluminum oxide and aluminum nitride.

The high heat conductive resin is a resin such as PET (Poly ethylene terephthalate) or nylon with fibers or particles formed of carbon or aluminum oxide, which has a high heat conductivity.

A mounting seat 102a protruding outward of the holding portion 102 is provided at an end of the opening side of the holding portion 102.

A housing portion 2a of a light emitting portion 2 is mounted on the mounting seat 102a. For example, the housing portion 2a of the light emitting portion 2 is fixed to the mounting seat 102a with a screw.

The joint between the holding portion 102 and the luminaire 1 is achieved, for example, by adhesion with an adhesive agent.

However, the joint between the holding portion 102 and the luminaire 1 is not necessarily required and, for example, the luminaire 1 may be simply interposed between the cover portion 101 and the holding portion 102.

The holding portion 102 may be, for example, a member provided on a vehicle.

The luminaire 1 is provided between the cover portion 101 and the holding portion 102.

As illustrated in Fig. 3, the luminaire 1 is provided with the light emitting portion 2 and the light guide portion 3.

A housing portion 2a and a light-emitting element 2b are provided on the light emitting portion 2.

In the case of the configuration illustrated in Fig. 3, two light emitting portions 2 are provided.

Light irradiated from the light emitting portions 2 is introduced into the light guide portion 3, and propagates in the light guide portion 3. In this case, since the propagating light attenuates, the longer the distance of propagation, the lower the intensity of light irradiated form the light guide portion 3. In this case, a plurality of the light emitting portions 2 are provided, and when the distance between the light emitting portions 2 is reduced, uniformity of the intensity of the light irradiated from the light guide portion 3 can easily be achieved. In contrast, increasing the number of the light emitting portions 2 results in an increase in size and cost of the luminaire 1.

Therefore, the number of the light emitting portions 2 maybe changed as needed so that the intensity of the light irradiated from the light guide portion 3 can be kept to be a predetermined value or higher.

If the intensity of the light irradiated from the light guide portion 3 is the predetermined value or higher, the number of the light emitting portions 2 may be one.

The housing portion 2a holds the light-emitting element 2b and protects the light-emitting element 2b.

The housing portion 2a is formed into a T-shape in plan view, and one of the end portions corresponds to a light illuminating surface 2a1. The illuminating surface 2a1 may be provided with an optical element such as a lens.

A mounting seat 2a2 is provided at the other end portion of the housing portion 2a.

When assembling the container holder 100, the mounting seat 2a2 is placed on the mounting seat 102a of the holding portion 102, and a tapping screw, for example, is screwed into the hole provided in the mounting seat 2a2, so that the housing portion 2a, and hence the light emitting portion 2 can be mounted on the holding portion 102.

The material of the housing portion 2a is not specifically limited. However, if a resin is employed, manufacture of the housing portion 2a is easy.

When the calorific power of the light-emitting element 2b is high, the housing portion 2a is formed by using a material having a high heat conductivity.

A material having a high heat conductivity may be selected from, for example, the above-described high heat conductive resin, metal, or ceramics such as aluminum oxide and aluminum nitride.

The light-emitting elements 2b is provided in the housing portion 2a, and irradiate light toward the illuminating surface 2a1.

The light-emitting element 2b may be, for example, a light-emitting diode or a laser diode.

The number of the light-emitting elements 2b is not specifically limited. The number of the light-emitting elements 2b may be changed as needed depending on the size of the light guide portion 3 or the like. In other words, the number of the light-emitting elements 2b needs only to be one or more.

The form of the light-emitting element 2b is not specifically limited. The light-emitting element 2b may be a canon-ball-shaped light-emitting element, or may be a surface-mounted type (chip type) light-emitting element.

The terminal, which is not illustrated, provided on the light-emitting element 2b is exposed from the housing portion 2a. An external power source or the like is connected to the terminal, which is not illustrated, exposed from the housing portion 2a via a connector or the like.

The color of light to be irradiated from the light emitting portion 2 is not specifically limited. The color of light to be irradiated from the light emitting portion 2 may be changed as needed while considering the color or the design of the interior material of the vehicle.

The color of light to be irradiated from the light emitting portion 2 may be changed by providing a wavelength converter formed of a resin or the like containing fluorescent material, and selecting the type of the fluorescent material as needed.

For example, when the light-emitting element 2b is a blue light-emitting diode, and the fluorescent material is YAG-based fluorescent material (yttrium aluminum garnet-based fluorescent material), a YAG-based fluorescent material is excited by blue light irradiated from the blue light-emitting diode, and yellow fluorescent is irradiated from the YAG-based fluorescent material. Then, the blue light and the yellow light are mixed, so that white light is irradiated from the light emitting portion 2.

In this manner, the color of light to be irradiated from the light emitting portion 2 may be changed by selecting the type of the fluorescent material as needed.

The light guide portion 3 has a ring shape in plan view.

The light guide portion 3 is formed of a material having a translucency. The light guide portion 3 may be formed of, for example, a transparent resin such as acrylic resin or polycarbonate resin.

The light guide portion 3 includes a first irradiating portion 3a, an incident portion 3b, a second irradiating portion 3c, an incident portion 3d, a third irradiating portion 3e, and a fourth irradiating portion 3f.

The shape of an inner peripheral surface 3a1 of the first irradiating portion 3a in plan view may be similar to part of the shape of the outer peripheral surface of the container to be inserted.

In the case of the configuration illustrated in Fig. 3, the shape of the inner peripheral surface 3a1 of the first irradiating portion 3a in plan view is part of a circle.

The incident portion 3b has a rod shape, and is protruded outward of the first irradiating portion 3a.

One end of the incident portion 3b is connected to an outer peripheral surface of the first irradiating portion 3a. The other end of the incident portion 3b faces the light emitting portion 2. The other end of the incident portion 3b is an incident surface from which the light from the light emitting portion 2 enters.

The second irradiating portion 3c may have the same shape and the dimensions similar to the first irradiating portion 3a. In this case, the second irradiating portion 3c and the first irradiating portion 3a are point symmetry about a center of the light guide portion 3.

The incident portion 3d may have the same shape and the dimensions as the incident portion 3b. In this case, the incident portion 3d and the incident portion 3b are point symmetry about a center of the light guide portion 3.

For example, an angle θ between an axial line 3d1 of the incident portion 3d and a line 3c2 passing through a center 3d2 of a connecting portion between the incident portion 3d and the second irradiating portion 3c and coming into contact with an inner peripheral surface 3c1 of the second irradiating portion 3c may be set to exceed 0°.

As described later, the angle θ may be set to be an angle not larger than 15°.

A width W6 in the vicinity of the connecting portion in plan view may be set to be larger than a width W1 of the first irradiating portion 3a and a width W2 of the second irradiating portion 3c in plan view.

In the case of the configuration illustrated in Fig. 3, since two light emitting portions 2 are provided, the incident portion 3b and the incident portion 3d are provided. However, when only one light emitting portion 2 is provided, provision of the incident portion 3b and the incident portion 3d are not necessary.

The number of the incident portion and the number of the light emitting portions 2 may be the same.

The third irradiating portion 3e is provided between the first irradiating portion 3a and the second irradiating portion 3c.

One end of the third irradiating portion 3e is provided at an end of the first irradiating portion 3a and the other end of the third irradiating portion 3e is provided at one end of the second irradiating portion 3c.

The fourth irradiating portion 3f is provided between the first irradiating portion 3a and the second irradiating portion 3c. One end of the fourth irradiating portion 3f is provided at the other end of the first irradiating portion 3a and the other end of the fourth irradiating portion 3f is provided at the other end of the second irradiating portion 3c.

The cross-sectional shapes of the first irradiating portion 3a, the incident portion 3b, the second irradiating portion 3c, the incident portion 3d, the third irradiating portion 3e, and the fourth irradiating portion 3f, that is, the cross-sectional shapes of the light guide portion 3 are not specifically limited.

However, as illustrated in Fig. 4, if the cross-sectional shape of the light guide portion 3 is a rectangular shape, adhesiveness between the light guide portion 3 and the cover portion 101, and the adhesiveness between the light guide portion 3 and the holding portion 102 may be improved.

Surfaces other than the inner peripheral surface 3g of the light guide portion 3 are not visible from the outside. In contrast, the inner peripheral surface 3g of the light guide portion 3 is visible from the outside via the hole portion 101a of the cover portion 101.

In this case, if there is unevenness in brightness in the inner peripheral surface 3g, difficulty in visibility or lowering of commodity value may result.

Fig. 5 is a drawing illustrating a state of light leakage in the light guide portion 30 of a comparative example.

In the light guide portion 30 of the comparative example, light is introduced from the tangential direction of the inner peripheral surface 30a1 of the first irradiating portion 30a to the light guide portion 30.

The widths of the respective elements of the light guide portion 30 in plan view are the same.

Fig. 5 illustrates light leakage from the light guide portion 30 as a result of light trace simulation.

Here, in order to enhance the light introduction efficiency into the light guide portion 3, an angle θ between an axial line 3b1 of the incident portion 3b and a line 3a2 passing through a center 3b2 of the connecting portion between the incident portion 3b and the first irradiating portion 3a and coming into contact with the inner peripheral surface 3a1 of the first irradiating portion 3a may be set to 0°.

In other words, light may be introduced from the tangential direction of the inner peripheral surface 3a1 of the first irradiating portion 3a to the light guide portion 3.

However, if the light is introduced from the tangential direction of the inner peripheral surface 3a1 of the first irradiating portion 3a into the light guide portion 3, as illustrated in Fig. 5, light leakage in the vicinity of the connecting portion between the incident portion 3b and the first irradiating portion 3a increases.

Therefore, in the vicinity of the connecting portion between the incident portion 3b and the first irradiating portion 3a, the inner peripheral surface 30a1 becomes too bright.

The same applies to the vicinity of the connecting portion between the incident portion 3d and the second irradiating portion 3c.

If the widths of the first irradiating portion 3a, the second irradiating portion 3c, the third irradiating portion 3e, and the fourth irradiating portion 3f are set to be the same in plan view, light leakage increases at a position in the vicinity of the connecting portion between the first irradiating portion 3a and the third irradiating portion 3e, a position in the vicinity of the connecting portion between the first irradiating portion 3a and the fourth irradiating portion 3f, a position in the vicinity of the connecting portion between the second irradiating portion 3c and the third irradiating portion 3e, and a position in the vicinity of the connecting portion between the second irradiating portion 3c and the fourth irradiating portion 3f as illustrated in Fig. 5

Therefore, the inner peripheral surface becomes too bright in the vicinities of these connecting portions.

In the luminaire 1 of the embodiment, the angle θ between the axial line 3b1 of the incident portion 3b and the line 3a2 passing through the center 3b2 of the connecting portion between the incident portion 3b and the first irradiating portion 3a and coming into contact with the inner peripheral surface 3a1 of the first irradiating portion 3a exceeds 0°.

In this case, when the angle θ is increased, the light leaking from the outer peripheral surface of the light guide portion 3 in the vicinity of the connecting portion increases. Therefore, the inner peripheral surface may be prevented from becoming bright.

However, if the angle θ is too large, the inner peripheral surface becomes too dark in the vicinity of the connecting portion.

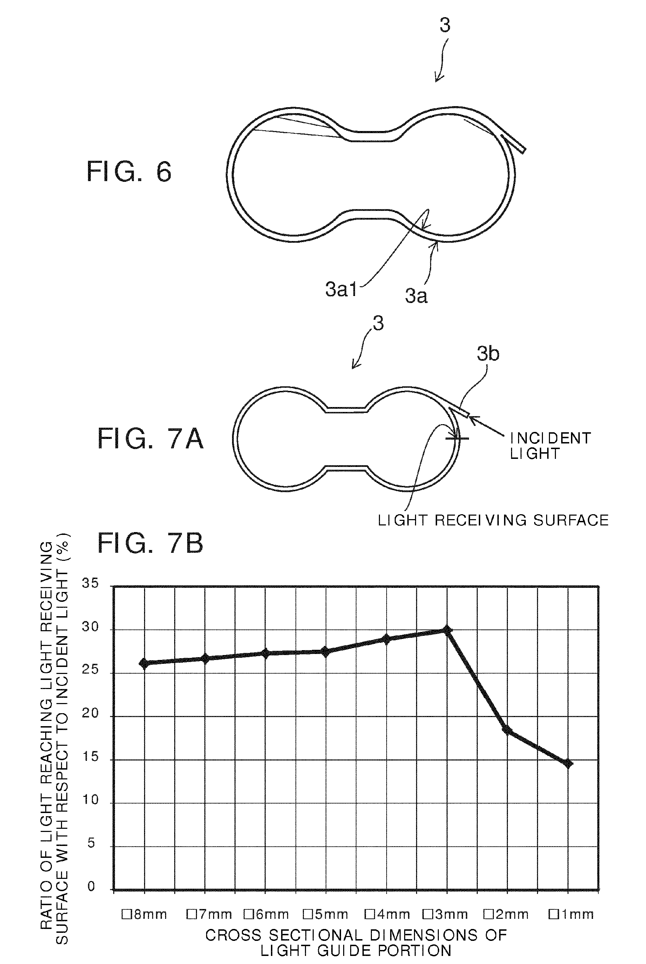

Fig. 6 is a drawing illustrating a state of light leakage in the light guide portion 3 of the embodiment.

Fig. 6 illustrates light leakage from the light guide portion 3 as a result of light trace simulation.

If the angle θ exceeds 0° and not more than 15°, the amount of light leaking toward the inner peripheral surface of the light guide portion 3 in the vicinity of the connecting portion may be reduced and unevenness in brightness of the inner peripheral surface (light-emitting surface) may be reduced as illustrated in Fig. 6.

In the light guide portion 3, the width W3 of the third irradiating portion 3e and the width W4 of the fourth irradiating portion 3f in plan view are larger than the width W1 of the first irradiating portion 3a and the width W2 of the second irradiating portion 3c.

In this configuration, the angles of the light entering from the positions in the vicinity of the connecting portions become a clinical angle or more. Therefore, as illustrated in Fig. 6, the amount of light leaking toward the inner peripheral surface of the light guide portion 3 in the vicinity of the connecting portion may be reduced, and unevenness of brightness of the inner peripheral surface may be reduced.

In the light guide portion 3, the width W5 of the position in the vicinity of the connecting portion between the incident portion 3b and the first irradiating portion 3a in plan view is larger than the width W1 of the first irradiating portion 3a. In this configuration, the angles of the light entering from the positions in the vicinity of the connecting portions become a clinical angle or more. Therefore, as illustrated in Fig. 6, the amount of light leaking toward the inner peripheral surface of the light guide portion 3 in the vicinity of the connecting portion may be reduced, and unevenness of brightness of the inner peripheral surface may be reduced.

The same applies to the vicinity of the connecting portion between the incident portion 3d and the second irradiating portion 3c.

Fig. 7A and 7B are graph diagrams illustrating a relationship between a cross-sectional dimension and a light-incident efficiency of the light guide portion 3.

As illustrated in Fig. 7A, a light receiving surface is set at a position far from the incident portion 3b in the direction of propagation of light.

The cross-sectional shape of the light guide portion 3 is square.

Then, the cross-sectional dimensions of the light guide portion 3 is changed to obtain the light intensity reaching the light receiving surface by simulation.

As understood from Fig. 7B, the width and the thickness of the light guide portion 3 are set to be not smaller than 3 mm, light-incident efficiency is improved.

Here, when the amount of light leaking from the outer peripheral surface of the light guide portion 3, the brightness of the inner peripheral surface may be increased.

For example, by providing concavities and convexities on the outer peripheral surface of the light guide portion 3, light entering from the outer peripheral surface are diffused by the concavities and convexities, so that the light can be taken out from the inner peripheral surface easily.

In this case, the longer the propagation distance (the farther from the incident portion), the lower the light intensity becomes. Therefore, it is preferable to increase the size of the concavities and convexities or reduce the intervals between convexities or the intervals between the concavities, that is, reduce the pitches as the propagation distance increases.

In this configuration, the brightness of the inner peripheral surface may be increased even when the propagation distance is increased. The concavities and convexities on the outer peripheral surface may be formed by, for example, blast process. The sizes or the pitches of the concavities and convexities may be adjusted by controlling the conditions of the blast process.

It is also possible to provide the concavities and convexities on the inner peripheral surface of the light guide portion 3. If the concavities and convexities is provided on the inner peripheral surface of the light guide portion 3, light irradiated from the inner peripheral surface can be diffused. The concavities and convexities on the inner peripheral surface may be formed by, for example, blasting. The sizes or the pitches of the concavities and convexities may be adjusted by controlling the conditions of the blast process.

As described above, by increasing the width of the light guide portion 3 at the positions in the vicinities of the connecting portions, the brightness of the inner peripheral surface in the vicinities of the connecting position may be reduced.

Therefore, by reducing the width of the connecting portion at the position where the propagation distance is long, the brightness of the inner peripheral surface in the vicinity of the connecting portion may be increased even though the propagation distance is increased.

In the description given above, the container holder 100 which can hold up to two containers has been exemplified. However, the invention may be applied to a container holder which holds one container, or container holders which hold three or more containers as well.

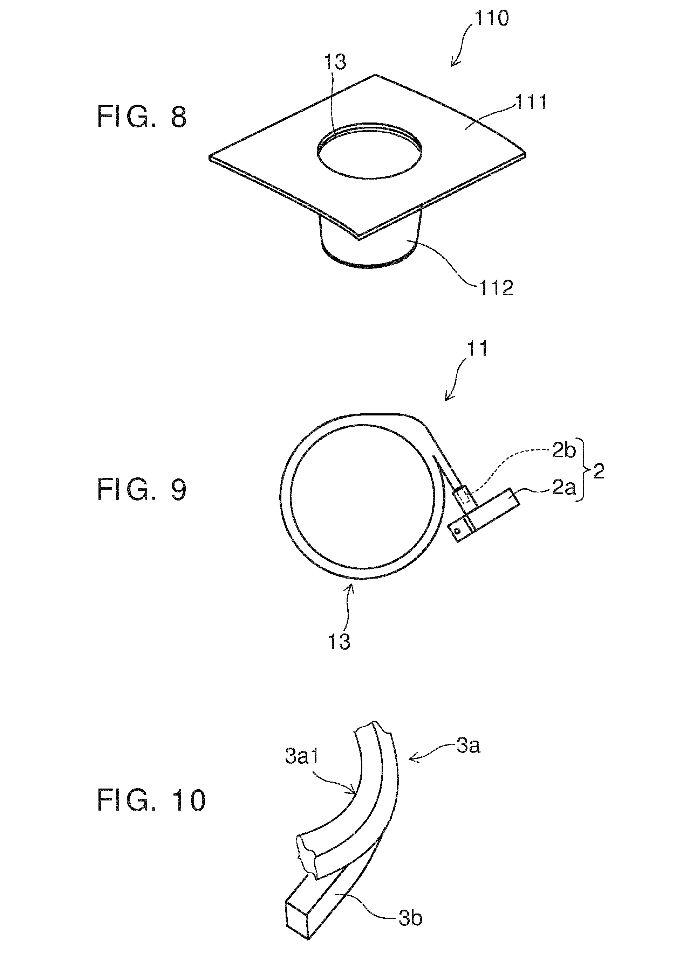

Fig. 8 is a schematic perspective view illustrating a container holder 110 that holds one container.

Fig. 9 is a schematic drawing illustrating a light guide portion 13 provided on the container holder 110.

As illustrated in Fig. 8 and Fig. 9, the container holder 110 is provided with a cover portion 111, a holding portion 112, and a luminaire 11.

The luminaire 11 is provided with the light emitting portion 2 and the light guide portion 13 having a ring shape.

The incident portion 13b may be the same as the incident portion 3b described above.

For example, the incident portion 13b is provided on an outer peripheral surface of the light guide portion 13 at one end thereof and facing the light-emitting portion 2 at the other end thereof.

An angle θ between a axial line 13b1 of the incident portion 13b and a line 13a2 passing through a center 13b2 of the connecting portion between the incident portion 13b and the light guide portion 13, and coming into contact with the inner peripheral surface 13a1 of the light guide portion 13 may be set to exceed 0°.

Also, an angle θ between a axial line 13b1 of the incident portion 13b and a line 13a2 passing through a center 13b2 of the connecting portion between the incident portion 13b and the light guide portion 13, and coming into contact with the inner peripheral surface 13a1 of the light guide portion 13 may be set to be not larger than 15°.

A width W6 in the vicinity of the connecting portion in plan view may be set to be larger than a width W7 of the light guide portion 13 in plan view.

At least one of the inner peripheral surface and the outer peripheral surface of the light guide portion 13 may be provided with concavities and convexities.

The same configurations as the container holder 100 and the luminaire 1may be employed except for configuring for holding one container.

Therefore, detailed description relating to the container holder 110 will be omitted.

Although the incident portion 3b provided on the outer peripheral surface of the light guide portion 3 has been described, the incident portion 3b may be provided on at least one of the end surfaces on the side where the cover portion 101 and the holding portion 102 of the light guide portion 3 are provided. In other words, the incident portion may only be provided on the light guide portion13 at one end thereof and facing the light-emitting portion at the other end thereof.

Fig. 10 is a schematic perspective view illustrating a state of disposition of an incident portion of another embodiment.

As illustrated in Fig. 10, the incident portion 3b may be provided on an end surface on the side where the holding portion 102 of the light guide portion 3 is provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

## Claims

1. A luminaire (11) comprising:
a light guide portion (13) having a ring shape;
a light-emitting portion (2) having a light-emitting element (2b) and configured to irradiate the light guide portion (13) with light.
an incident portion (13b) provided on an outer peripheral surface of the light guide portion (13) at one end thereof and facing the light-emitting portion (2) at the other end thereof, wherein
an angle (θ) between an axial line (13b1) of the incident portion (13b) and a line (13a2) passing through a center of a connecting portion between the incident portion (13b) and the light guide portion (13) and coming into contact with an inner peripheral surface of the light guide portion (13) exceeds 0°.

2. The luminaire (11) according to Claim 1, wherein
a width (W7) in the vicinity of the connecting portion in plan view is larger than a width (W8) of the light guide portion (13) in plan view.

3. A luminaire (1) comprising:
a light guide portion (3) having a ring shape including:
a first irradiating portion (3a) having an inner peripheral surface (3a1) of a shape constituting part of a circle in plan view;
a second irradiating portion (3c) having an inner peripheral surface of a shape constituting part of a circle in plan view;
a third irradiating portion (3e) provided at an end of the first irradiating portion (3a) at one end thereof and provided at one end of the second irradiating portion (3c) at the other end thereof; and
a fourth irradiating portion (3f) provided at the other end of the first irradiating portion (3a) at one end thereof and provided at the other end of the second irradiating portion (3c) at the other end thereof; and
a light-emitting portion (2) having a light-emitting element (2b) and configured to irradiate the light guide portion (3) with light, wherein
light irradiated from the light-emitting portion (2) and incident on the light guide portion (3) is irradiated from the inner peripheral surface (3g) of the light guide portion (3).

4. The luminaire (1) according to Claim 3, wherein
an incident portion (3b) provided on the light guide portion (3) at one end thereof and facing the light-emitting portion (2) at the other end thereof.

5. The luminaire (1) according to Claim 4, wherein
one end of the incident portion (3b) is provided at least one of an outer peripheral surface of the first irradiating portion (3a) and an outer peripheral surface of the second irradiating portion (3c).

6. The luminaire (1) according to Claim 5, wherein
an angle (θ) between an axial line (3b1) of the incident portion (3b) and a line (3a2) passing through a center (3b2) of a connecting portion between the incident portion (3b) and the first irradiating portion (3a) and coming into contact with an inner peripheral surface (3a1) of the first irradiating portion (3a) exceeds 0°.

7. The luminaire (1) according to Claim 5, wherein
an angle (θ) between an axial line (3d1) of the incident portion (3d) and a line (3c2) passing through a center (3d2) of a connecting portion between the incident portion (3d) and the second irradiating portion (3c) and coming into contact with an inner peripheral surface (3c1) of the second irradiating portion (3c) exceeds 0°.

8. The luminaire (1) according to Claim 6 or 7, wherein
the width (W5, W6) of positions in the vicinity of the connecting portions in plan view are larger than the width (W1) of the first irradiating portion (3a) and the width (W2) of the second irradiating portion (3c) in plan view.

9. The luminaire (1) according to any one of Claims 3 to 8, wherein
the width (W3) of the third irradiating portion (3e) and the width (W4) of the fourth irradiating portion (3f) in plan view are larger than the width (W1) of the first irradiating portion (3a) and the width (W2) of the second irradiating portion (3c) in plan view.

10. The luminaire (1, 11) according to any one of Claim 1 to 9, wherein
at least one of the inner peripheral surface (3g) and the outer peripheral surface of the light guide portion (3) is provided with concavities and convexities.

11. A container holder (100) comprising:
a cover portion (101) having a hole portion (101a) for inserting a container;
a holding portion (102) having an opening for inserting the container, and provided so that the opening faces the hole portion (101a) of the cover portion (101); and
a luminaire (1, 11) according to any one of Claims 1 to 10 provided between the cover portion (101) and the holding portion (102).
